# EUROPÄISCHE PATENTANMELDUNG

(11) **EP 4 036 713 A1**
(43) Veröffentlichungstag der Anmeldung: **03.08.2022**
(21) Anmeldenummer: 21154620.5
(22) Anmeldetag: 01.02.2021
(51) Int. Cl.: G06F 8/72, G06N 3/12

(54) **KI-GESTÜTZTE AUTOMATISCHE SOFTWARECODE-REFAKTORISIERUNG**

(71) Anmelder: Siemens Aktiengesellschaft, 80333 München (DE)
(72) Erfinder: Höfig, Kai, 83101 Rohrdorf (DE)

(57) **Zusammenfassung**

Die Erfindung gibt ein computer-implementiertes Verfahren zur Optimierung eines Softwarecodes durch Refaktorisierung an, mit den schritten:
a) Bereitstellen von n Einstiegspunkten (2) zur Refaktorisierung des Quellcodes,
b) Bereitstellen (100) eines n-dimensionalen Refaktorvektors (1) und für jeden Einstiegspunkt (2) einen zugehörigen Parametervektor (3),
- wobei der Refaktorvektor (1) an der Stelle eine "Null" aufweist, wenn keine Refaktorisierung für den zugehörigen Einstiegspunkt (2) vorgenommen wird, und eine "Eins" aufweist, wenn eine Refaktorisierung für den zugehörigen Einstiegspunkt (2) durchgeführt wird,
- und wobei in dem Parametervektor (3) Parameter (4) bereitgehalten werden, die für die jeweilige Refaktorisierung erforderlich sind,

c) Erzeugen (101) von refaktorisierten Quellcodes mit Hilfe des Refaktorvektors (1) und dem zugehörigen Parametervektor (3) und weiteren Refaktorvektoren (1) mit weiteren Einstiegspunkten (2) und ihren zugehörigen Parametervektoren (3), und
d) Ermittlung (102) der Fitness der refaktorisierten Quellcodes durch eine vorgegebene Fitnessfunktion (F).

Eine zugehörige Einrichtung mit einer Recheneinheit, ein zugehöriges Computerprogrammprodukt sowie ein computerlesbares Medium werden ebenfalls angegeben.

## Beschreibung

### GEBIET DER ERFINDUNG

Die Erfindung betrifft ein computer-implementiertes Verfahren zur Optimierung eines Softwarecodes durch Refaktorisierung. Eine zugehörige Einrichtung mit einer Recheneinheit, ein zugehöriges Computerprogrammprodukt sowie ein computerlesbares Medium sind ebenfalls betroffen.

### HINTERGRUND DER ERFINDUNG

Die Qualität von Quellcode ist mehrdimensional und schwer zu verbessern oder zu erfassen. Die verschiedenen Qualitätsattribute wie etwa Maintainability, Performance, Testablity oder Reliability spielen bei der Beurteilung, ob es sich um einen guten Code handelt eine wichtige Rolle. Je größer der Quellcode ist, desto schwerer wird es, die Qualität zu verbessern oder manuell zu überblicken. Daher ist es an der Zeit, nicht nur die Messung der Qualitätsattribute zu verbessern, sondern auch den Prozess der Codeverbesserung selbst zu automatisieren. Da dies einer Mehrzieloptimierung mit unendlich vielen Möglichkeiten entspricht, handelt es sich dabei um ein schweres, mit aktuellen Techniken sogar unlösbares Problem.

Bisher wurde die Messung der Qualitätseigenschaften durch eine Automatisierung unterstützt. So gibt es zahlreiche Entwicklungswerkzeuge, die in der Lage sind, verschiedene Qualitätseigenschaften automatisiert zu messen. Beispiele dafür sind zahlreich und zielen häufig auf die statische Codeanalyse ab, wie https://de.wikipedia.org/wiki/Liste von Werkzeugen zur statis chen Codeanalyse.

Betrachtet man das Feld der automatischen Codeverbesserung, findet man wissenschaftliche Artikel zur automatisierten Durchführung von Codeverbesserungen, wie etwa in Iman Hemati Moghadam et. Al, "Code-Imp: a tool for automated search-based refactoring", WRT '11: Proceedings of the 4th Workshop on Refactoring Tools, May 2011 Pages 41-44; https://doi.org/10.1145/1984732.1984742 und P. Techapalokul and E. Tilevich, "Code Quality Improvement for All: Automated Refactoring for Scratch," 2019 IEEE Symposium on Visual Languages and Human-Centric Computing (VL/HCC), Memphis, TN, USA, 2019, pp. 117-125, doi: 10.1109/VLHCC.2019.8818950.

Dabei sind allerdings nur die "Refactorings" automatisiert, aber diese muss der Bediener vorher manuell auswählen oder festlegen. Vorschläge dafür können auch unterbreitet werden, wie etwa in S. Herbold, J. Grabowski and H. Neukirchen, "Automated Refactoring Suggestions Using the Results of Code Analysis Tools," 2009 First International Conference on Advances in System Testing and Validation Lifecycle, Porto, 2009, pp. 104-109, doi: 10.1109/VALID.2009.12 oder Moghadam I.H. (2011) Multi-level Automated Refactoring Using Design Exploration. In: Cohen M.B., Ó Cinneide M. (eds) Search Based Software Engineering. SSBSE 2011. Lecture Notes in Computer Science, vol 6956. Springer, Berlin, Heidelberg. https://doi.org/10.1007/978-3-642-23716-4_9.

Eine vollständige Automatisierung, die völlig selbstständig Code verbessert ist nicht vorhanden

### ZUSAMMENFASSUNG DER ERFINDUNG

Es ist Aufgabe der Erfindung, eine Lösung anzugeben, die Automatisierung der Refaktorisierung (auf Englisch Refactoring) von Quellcodes zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Um das beschriebene Problem zu lösen, wird ein Quellecode zunächst in eine andere Darstellung gebracht, mit Hilfe derer sich Maßnahmen festlegen lassen. Dann werden die Maßnahmen ergriffen und der Quellcode wird erneut geprüft, ob der erwünschte Grad der Qualität bereits erreicht ist. Diese Prüfung ist nicht Teil der Erfindung, da hierfür, wie zuvor beschrieben, bereits zahlreiche Techniken existieren.

Eine Refaktorisierung ist, ganz allgemein, eine Veränderung des Quellcodes, ohne die funktionalen Eigenschaften des Quellcodes zu verändern. Das bedeutet, ein Programm welches ausreichend getestet wurde und die geforderten funktionalen Eigenschaften erfüllt, verändert seine Funktion auf Grund von Refactorings nicht mehr, wohl aber seine nicht-funktionalen Eigenschaften (zum Beispiel könnte sich die Laufzeit verbessern oder verschlechtern).

Beispiele für eine Refaktorisierung sind:
1) Änderung eines Symbolnamens
2) Verschieben eines Symbols in ein anderes Modul, z. B. eine Methode in eine andere Klasse
3) Aufteilung eines Moduls (z. B. Paket, Klasse, Methode) in mehrere, kleinere Module
4) Zusammenlegung kleinerer Module zu einem größeren
5) Im weitesten Sinne auch die Umformatierung eines Quelltextes, z. B. mit einem Beautifier
6) Bei geänderten Geschäftsprozessen bei Darstellung mittels der Unified Modeling Language UML kann mittels "Refactoring" der Programmcode geändert werden. Dadurch wird eine robuste und stabile Systemarchitektur geschaffen, da unübersichtliche Änderungen nicht im Code initiiert werden müssen.
7) Anwenden von Funktionen höherer Ordnung in funktionalen Programmiersprachen
8) Auslagern (refactor'n) der gemeinsamen abstrakten Logik mehrerer Module in Funktoren. (Funktoren sind parametrisierte Module, die Module als Parameter erhalten und Module als Ergebnis liefern.)

Eine Refaktorisierung oder eine anders geartete Art und Weise Softwareodes zu verändern, so dass der Zweck des Programms erhalten bleibt, hat in dem Sinne dieser Erfindung einen sogenannten "Einstiegspunkt". Zum Beispiel bei Refactoring 2): ein Verschieben einer Methode in eine andere Klasse. Hier ist der Einstiegspunkt eine Methode. Weiterhin hat ein Refactoring einen Zielbereich. In diesem Beispiel sind das alle in Frage kommenden Klassen, in die die Methode verschoben werden könnte.

Ein Einstiegspunkt im Sinne dieser Erfindung ist also eine einzelne oder sind mehrere bestimmte Stellen im Quellcode oder auch eine Teilmenge des Quellcodes, der durch eine Refaktorisierung verändert werden soll.

Für Refactorings, die als Einstiegspunkt mehrere Parameter benötigen, zum Beispiel Refactoring 3), Aufteilung eines Moduls in mehrere kleinere: Hier gibt es einen Einstiegspunkt (zum Beispiel den Klassennamen) und mehrere Parameter (die neuen Klassen, die entstehen sollen und welche Methoden und Parameter den neuen Klassen zugeordnet werden).

Für Refactorings, die sich über mehrere Einstiegspunkte erstrecken, zum Beispiel für Refactoring 4): Zusammenlegen mehrere Module zu einem einzelnen großen Modul; die Parameter jedes Einstiegspunkts enthalten den neuen Klassennamen für das zu erstellende größere Modul (und eventuelle weitere spezifische Informationen für den Einstiegspunkt).

Dadurch ergibt sich pro Quellcode ein langer Vektor von Einstiegspunkten (= Refaktorvektor) und orthogonal dazu je einen Vektor zur Parametrisierung (= Parametervektor). In dem Refaktorvektor wird eine "Null" eingetragen, wenn kein Refactoring für diesen Einstiegspunkt vorgenommen werden soll, und eine "Eins", falls ein Refactoring für diesen Einstiegspunkt durchgeführt werden soll.

In dem Parametervektor, der für jedes durchzuführende Refactoring vorgehalten werden muss (also da, wo eine "Eins" im Refaktorvektor eingetragen ist), wird das jeweilige Refactoring mit einer eindeutigen Nummer referenziert und die Parameter bereitgehalten, die benötigt werden, um das Refactoring durchzuführen.

Die dieser Erfindung zu Grundlegende technische Weiterentwicklung besteht in der technischen Darstellung von identifizierten Refactorings einer einzelnen Codevariante. Dadurch lässt sich der Prozess systematisch automatisieren. Durch Randomisierung wird, zumindest theoretisch bei unendlich langer Laufzeit, erreicht, dass alle möglichen Refaktorisierungen auf alle möglichen Einstiegspunkte angewandt werden können. Die hier vorgestellte Vorrichtung automatisiert den kompletten Prozess, von der Übersetzung des Quellcodes in die Darstellung des Refaktorvektors, der Generierung neuer Varianten, der Mutation und des Vermischens von verbesserten Varianten und der Analyse der Verbesserung. Auf diese Weise hat die Vorrichtung die Fähigkeit, ohne eine genaue Vorgabe eines Menschen Quellcode automatisch zu verbessern.

Die Erfindung beansprucht ein computer-implementiertes Verfahren zur Optimierung eines Softwarecodes durch Refaktorisierung durch:
a) Bereitstellen von n Einstiegspunkten zur Refaktorisierung des Quellcodes,
b) Bereitstellen eines n-dimensionalen Refaktorvektors und für jeden einstiegspunkt einen zugehörigen Parametervektor,
   - wobei der Refaktorvektor an der Stelle eine "Null" aufweist, wenn keine Refaktorisierung für den zugehörigen Einstiegspunkt vorgenommen wird, und eine "Eins" aufweist, wenn eine Refaktorisierung für den zugehörigen Einstiegspunkt durchgeführt wird,
   - und wobei in dem Parametervektor die Parameter bereitgehalten werden, die für die jeweilige Refaktorisierung erforderlich sind,
c) Erzeugen von refaktorisierten Quellcodes aus dem Refaktorvektor und dem zugehörigen Parametervektor und weiteren Refaktorvektoren mit weiteren Einstiegspunkten und ihren zugehörigen Parametervektoren, und
d) Ermittlung der Fitness der refaktorisierten Quellcodes durch eine vorgegebene Fitnessfunktion.

Die Erfindung bietet den Vorteil, dass eine Refaktorisierung und die daraus folgende Erzeugung von Mutationen des Quellcodes automatisiert wird.

In einer Weiterbildung erfolgen:
e.1) Auswählen des Quellcodes und von refaktorisierten weiteren Quellcodes, die eine vorgegebene Schwelle der Fitness übersteigen, und
f) Erzeugung von Crossover-Refaktorvektoren durch Vermischen der den ausgewählten Quellcodes zugeordneten weiteren Refaktorvektoren.

In einer weiteren Ausgestaltung erfolgt das Vermischen mit Hilfe einer Crossover Funktion, wobei die Crossover Funktion randomisiert ist oder einer vorgegebenen Verteilung folgt.

In einer Weiterbildung erfolgen:
e.2) Auswählen des Quellcodes und von refaktorisierten weiteren Quellcodes, die einer vorgegebenen Anzahl von refaktorisierten weiteren Quellcodes, die die beste Fitness aufweisen, und
f) Erzeugung von Crossover-Refaktorvektoren durch Vermischen der den ausgewählten Quellcodes zugeordneten weiteren Refaktorvektoren.

In einer Weiterbildung erfolgt:
g) Iterieren der Schritte c) bis f) solange, bis eine vorgegebene Ziel-Fitness erreicht ist.

In einer weiteren Ausprägung können die weiteren Refaktorvektoren durch Randomisierung des Refaktorvektors erzeugt werden.

Die Erfindung beansprucht auch eine Einrichtung mit einer Recheneinheit, die ausgebildet und programmiert ist, das erfindungsgemäße Verfahren durchzuführen.

Die Erfindung beansprucht außerdem ein Computerprogrammprodukt, umfassend ein Computerprogramm, wobei das Computerprogramm in eine Speichereinrichtung einer Einrichtung ladbar ist, wobei mit dem Computerprogramm die Schritte eines erfindungsgemäßen Verfahrens ausgeführt werden, wenn das Computerprogramm auf der Einrichtung ausgeführt wird.

Die Erfindung beansprucht schließlich auch ein Computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines erfindungsgemäßen Verfahrens ausgeführt werden, wenn das Computerprogramm auf der Einrichtung ausgeführt wird.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
FIG. 1 ein Schaubild des Refaktorvektors und
FIG. 2 ein Ablaufdiagramm zur Refaktorisierung eines Quellcodes.

### DETAILLIERTE BESCHREIBUNG DER ERFINDUNG

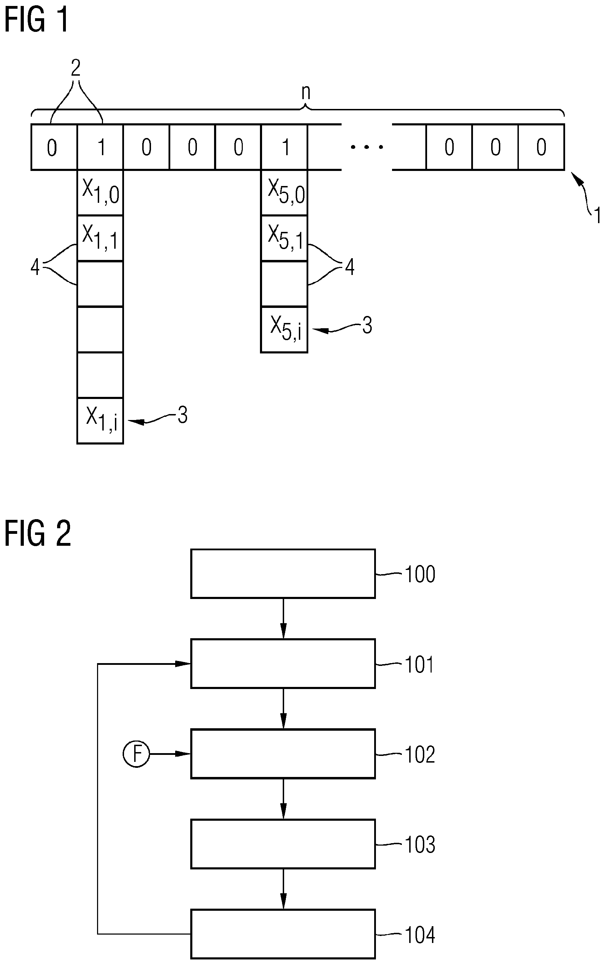

Für das erfindungsgemäße Verfahren ergibt sich für den Refaktorvektor 1 eine Darstellung gemäß FIG. 1 für die Einstiegspunkte 3 von möglichen Refaktorisierungen für einen gegebene Quellcode. Jedem Einstiegspunkt 3 ist ein Parametervektor 2 mit Parametern 4 für den jeweiligen einstiegspunkt 3 zugeordnet.

Auf diese Weise können einfach verschiedene Varianten eines Quellcodes durch Refactorings erzeugt werden. Die Varianten können nun durch einen generativen Designprozess, zum Beispiel durch genetische Programmierung, erzeugt werden. Dabei wird schrittweise vorgegangen, wie in FIG. 2 dargestellt:
a) Erzeuge die initiale Population (Schritt 100), zum Beispiel durch die Analyse des vorhandenen Quellcodes und die Erzeugung des initialen Refaktorvektors der ersten Generation (Phänotyp).
b) Erzeuge (schritt 101) durch Randomisierung des Refaktorvektors und der dazugehörigen Parametervektoren weitere Varianten des Quellcodes (Mutation).
c) Analysiere (Schritt 102) die Varianten durch bekannte Techniken des Stands der Technik und entscheide, ob die Qualität des Quellcodes bereits ausreichend ist (mit Hilfe einer Fitnessfunktion F).
d) Wähle (Schritt 103) die besten Varianten anhand der Fitnessfunktion F aus und unterwerfe sie einem Crossover (Vermischen der Refaktorvektoren).
e) Iteriere (Schritt 104) über Schritt b), bis die gewünschte Qualität erreicht ist.

Die Mutation des Refaktorvektors, wie in Schritt b) beschrieben, kann randomisiert erfolgen oder durch eine Vorauswahl, beispielsweise eines "Reccommender Sytems", weiter eingeschränkt werden oder die Verteilungsfunktion kann angepasst werden, so dass bestimmte Refaktorierungen weniger wahrscheinlich werden als andere.

Eine Fitnessfunktion ist die Zielfunktion eines evolutionären (Optimierungs-)Algorithmus (EA). Gelegentlich wird eine Fitnessfunktion auch als Teil einer Zielfunktion beschrieben oder andersherum. Wie auch evolutionäre Algorithmen haben Fitnessfunktionen ein biologisches Vorbild, die biologische Fitness, die den Grad der Anpassung eines Organismus an seine Umgebung angibt. Bei evolutionären Algorithmen beschreibt die Fitness eines Lösungskandidaten, wie gut er das zugrunde liegende Optimierungsproblem löst. Die Fitnessfunktion berechnet aus den Eigenschaften eines Lösungsversuchs, wie gut sich dieses "Individuum" bzgl. des gestellten Problems als Lösung eignet.

Eine Fitnessfunktion muss nicht zwangsläufig einen absoluten Wert berechnen können, da es oft reicht, Kandidaten zu vergleichen, um den besseren auszuwählen. Eine relative Angabe der Fitness (Kandidat a ist besser als b) genügt in manchen Fällen[2], wie z. B. bei der Turnierselektion.

Ein Empfehlungsdienst (englisch Recommender System) ist ein Softwaresystem, welches das Ziel hat, eine Vorhersage zu treffen, die quantifiziert, wie stark das Interesse eines Benutzers an einem Objekt ist, um dem Benutzer genau die Objekte aus der Menge aller vorhandenen Objekte zu empfehlen, für die er sich wahrscheinlich am meisten interessiert.

Die Crossover Funktion (im Schritt d)) kann ebenfalls randomisiert sein oder einer vorgegebenen Verteilung folgen. Gegebenenfalls kann der Schritt d) auch ausgelassen werden. Die Fitnessfunktion kann beispielsweise durch die zuvor beschriebenen analytischen Verfahren automatisiert werden.

Als Crossing-over oder Crossover wird in der Genetik der Vorgang bzw. das Ergebnis eines gegenseitigen Austausches von einander entsprechenden Abschnitten zweier homologer Chromosomen (und damit der Austausch von Genen). In der Patentanmeldung wird Crossover analog auf den Austausch von Abschnitten des Refaktorvektors angewandt.

Es ist anzunehmen, wie auch aus Studien zum generativen Design oder zur genetischen Programmierung zu erkennen ist, dass durch diesen Prozess zumindest lokale Optima zu erwarten sind.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Refaktorvektor
- 2: Einstiegspunkt
- 3: Parametervektor
- 4: Parameter
- F: Fitnessfunktion
- 100: Erzeugung des Refaktorvektors und Quellcode der ersten Generation
- 101: Erzeugung weiterer Refaktorvektoren und Mutationen des Quellcodes
- 102: Analyse der Quellcodes anhand einer Fitnessfunktion F
- 103: Auswahl der besten Varianten der Quellcodes
- 104: Iteration

## Patentansprüche

1. Computer-implementiertes Verfahren zur Optimierung eines Softwarecodes durch Refaktorisierung,
**gekennzeichnet durch**:
a) Bereitstellen von n Einstiegspunkten (2) zur Refaktorisierung des Quellcodes,
b) Bereitstellen (100) eines n-dimensionalen Refaktorvektors (1) und für jeden Einstiegspunkt (2) einen zugehörigen Parametervektor (3),
- wobei der Refaktorvektor (1) an der Stelle eine "Null" aufweist, wenn keine Refaktorisierung für den zugehörigen Einstiegspunkt (2) vorgenommen wird, und eine "Eins" aufweist, wenn eine Refaktorisierung für den zugehörigen Einstiegspunkt (2) durchgeführt wird,
- und wobei in dem Parametervektor (3) Parameter (4) bereitgehalten werden, die für die jeweilige Refaktorisierung erforderlich sind,
c) Erzeugen (101) von refaktorisierten Quellcodes mit Hilfe des Refaktorvektors (1) und dem zugehörigen Parametervektor (3) und weiteren Refaktorvektoren (1) mit weiteren Einstiegspunkten (2) und ihren zugehörigen Parametervektoren (3), und
d) Ermittlung (102) der Fitness der refaktorisierten Quellcodes durch eine vorgegebene Fitnessfunktion (F).

2. Verfahren nach Anspruch 1,
**gekennzeichnet durch**:
e.1) Auswählen (103) des Quellcodes und von refaktorisierten weiteren Quellcodes, die eine vorgegebene Schwelle der Fitness übersteigen, und
f) Erzeugung von Crossover-Refaktorvektoren durch Vermischen der den ausgewählten Quellcodes zugeordneten weiteren Refaktorvektoren (1).

3. Verfahren nach Anspruch 2,
**dadurch gekennzeichnet, dass** das Vermischen mit Hilfe einer Crossover Funktion erfolgt, wobei die Crossover Funktion randomisiert ist oder einer vorgegebenen Verteilung folgt.

4. Verfahren nach Anspruch 1,
**gekennzeichnet durch**:
e.) Auswählen (103) des Quellcodes und von refaktorisierten weiteren Quellcodes, die einer vorgegebenen Anzahl von refaktorisierten weiteren Quellcodes, die die beste Fitness aufweisen, und
f) Erzeugung von Crossover-Refaktorvektoren durch Vermischen der den ausgewählten Quellcodes zugeordneten weiteren Refaktorvektoren.

5. Verfahren nach einem der Ansprüche 2 bis 4, **gekennzeichnet durch**:
g) Iterieren (104) der Schritte c) bis f) solange, bis eine vorgegebene Ziel-Fitness erreicht ist.

6. Verfahren nach einem der vorherigen Ansprüche,
**dadurch gekennzeichnet, dass** die weiteren Refaktorvektoren (1) durch Randomisierung des Refaktorvektors (1) erzeugt werden.

7. Einrichtung mit einer Recheneinheit, die ausgebildet und programmiert ist, das Verfahren nach einem der Ansprüche 1 bis 6 durchzuführen.

8. Computerprogrammprodukt, umfassend ein Computerprogramm, wobei das Computerprogramm in eine Speichereinrichtung einer Einrichtung nach Anspruch 6 ladbar ist, wobei mit dem Computerprogramm die Schritte eines Verfahrens nach einem der Ansprüche 1 bis 5 ausgeführt werden, wenn das Computerprogramm auf der Einrichtung ausgeführt wird.

9. Computerlesbares Medium, auf welchem ein Computerprogramm gespeichert ist, wobei das Computerprogramm in eine Speichereinrichtung einer Einrichtung nach Anspruch 6 ladbar ist, wobei mit dem Computerprogramm die Schritte eines Verfahrens nach einem der Ansprüche 1 bis 5 ausgeführt werden, wenn das Computerprogramm auf der Einrichtung ausgeführt wird.
